# EUROPÄISCHE PATENTSCHRIFT

(11) **EP 1 616 736 B1**
(45) Veröffentlichungstag und Bekanntmachung des Hinweises auf die Patenterteilung: **20.06.2012**
(21) Anmeldenummer: 05106326.1
(22) Anmeldetag: 11.07.2005
(51) Int. Cl.: B01D 46/10, B01D 46/00, B01D 46/52, B60H 3/06

(54) **Zuluftfilter mit Faltenfiltereinsatz**
Fresh air filter with folded filter insert
Filtre d'air frais comprenant un filtre plié

(30) Priorität: 15.07.2004 DE 102004034302
(43) Veröffentlichungstag der Anmeldung: 18.01.2006
(73) Patentinhaber: MANN+HUMMEL GmbH, 71638 Ludwigsburg (DE)
(72) Erfinder: Walz, Stefan, 71691 Freiberg (DE)
(74) Vertreter: Seyboth, Matthias

(56) Entgegenhaltungen:
- EP-A- 0 759 319
- DE-A1- 10 111 318
- DE-A1- 19 548 197
- DE-C1- 3 441 918

## Beschreibung

Die Erfindung betrifft einen Zuluftfilter von Fahrzeuginnenräumen mit den Merkmalen nach dem Oberbegriff des Anspruchs 1.

Bei der Innenraumbelüftung von Kraftfahrzeugen werden Innenraumfilter eingesetzt, die zur Reinigung der von außen zugeführten Frischluft von Staub, Pollen oder dergleichen vorgesehen sind. Entsprechende Innenraumfilter weisen ein Gehäuse auf, in dem ein Faltenfiltereinsatz gehalten ist. Der Faltenfiltereinsatz umfaßt ein papier- bzw. vliesartiges Filtermaterial, welches durch seine zickzackförmige Faltung eine große Filtrierfläche bezogen auf das Bauvolumen aufweist.

Derartige Faltenfiltereinsätze sind in festen Zeitintervallen oder nach Erreichen eines gewissen Verschmutzungsgrades auszutauschen. Die zunehmend komplexer werdenden Systeme eines Fahrzeuges haben eine Verknappung des Bauraumes zur Folge, die den Austausch eines Filtereinsatzes erschwert. Innenraumfilter können an schwer zugänglichen Stellen des Fahrzeuges angeordnet sein, bei denen die Entnahme eines verbrauchten Faltenfiltereinsatzes und insbesondere der Einbau eines neuen Faltenfiltereinsatzes erschwert ist. Faltenfiltereinsätze bekannter Bauweise sind mechanisch empfindlich. Eine beim Einbau vorgenommene versehentliche Verformung kann zu dessen Schädigung bzw. Zerstörung führen.

Aus der DE 197 57 423 C1 ist ein Faltenfiltereinsatz bekannt, der an seinen beiden quer zur Längsrichtung verlaufenden Stirnseiten je ein leistenförmiges Verstärkungselement mit einer angeformten Dichtung aufweist. Die Längskanten des Filtereinsatzes sind ohne Verstärkungselemente ausgeführt und erlauben eine elastische Verformung des zickzack-förmig gefalteten Filtermaterials in der Längsrichtung. Die stirnseitigen Verstärkungselemente sind aus Polypropylen ausgeführt und sind materialbedingt nur sehr eingeschränkt verformbar. Eine unachtsame Montage des Filtereinsatzes kann zu einer Schädigung der steifen Verstärkungselemente führen, in dessen Folge der Filtereinsatz insgesamt unbrauchbar wird.

Ein Gattungsgemäßer Zuluftfilter ist aus der DE 4 327 368 A1 bekannt.

Der Erfindung liegt die Aufgabe zugrunde, die Montierbarkeit eines Faltenfiltereinsatzes auch unter räumlich beengten Bedingungen zu verbessern.

Die Aufgabe wird durch einen Zuluftfilter mit den Merkmalen des Anspruchs 1 gelöst.

Es wird ein Zuluftfilter umfassend einen Faltenfiltereinsatz mit Rahmenelementen an beiden quer zur Längsrichtung verlaufenden Stirnseiten vorgeschlagen, wobei die Rahmenelemente eine an die Montage in ein Filtergehäuse angepaßte gummielastische Nachgiebigkeit aufweisen. Die vorgeschlagene Anordnung erlaubt eine größere elastische Verformung der Stirnseite des Faltenfiltereinsatzes bei der Montage. Die stirnseitigen Rahmenelemente werden einer Schubverformung unterzogen, was ein Einfädeln des verformten Faltenfiltereinsatzes in eine vergleichsweise enge Montageöffnung des Filtergehäuses ermöglicht. Nach dem Einfädeln sorgen die gummielastischen Eigenschaften des Rahmenelementes für eine selbsttätige Rückstellung der Verformung, in dessen Folge der Faltenfiltereinsatz dicht an den Innenwänden des Filtergehäuses anliegt. Es hat sich überraschend gezeigt, daß die angrenzenden stirnseitigen Falten des Faltenfilters einer entsprechenden Verformung ohne Schädigung folgen können und infolge der gummielastischen Rückstellkräfte des Rahmenelementes ihre ursprünglich vorgesehene Form im montierten Zustand wieder einnehmen.

Es sind zweckmäßig weitere gummielastische Rahmenelemente an den Längsseiten des Faltenfilters vorgesehen, die insbesondere zusammen mit den Rahmenelementen an den Stirnseiten einen geschlossenen, umlaufenden Rahmen bilden. Der Faltenfiltereinsatz kann insgesamt an Stirn- und Längsseiten verformt werden. Die nahezu beliebige schädigungsfreie Verformbarkeit erlaubt ein Herumführen des Faltenfiltereinsatzes um andere, im Wege liegende System- bzw. Fahrzeugkomponenten herum und damit einen vereinfachten Einbau in das vorgesehene Filtergehäuse. Nach dem Einsetzen nimmt der Faltenfilter selbsttätig und ohne weiteres Zutun wieder seine ursprünglich vorgesehene Form an.

Als geeignetes Material für das Rahmenelement bzw. für die Rahmenelemente hat sich ein thermoplastisches Vulkanisat (TPV), ein Elastomer, ein thermoplastisches Elastomer (TPE), Polyurethan und/oder Silikon als zweckmäßig herausgestellt. Das Rahmenelement kann dabei materialeinheitlich oder bedarfsweise aus mehreren der genannten Materialien, beispielsweise in geschichteter Form, aufgebaut sein. Die Rahmenelemente sind zweckmäßig als Endlosmaterial im Extrudierverfahren oder als Formteile im Spritzgußverfahren bzw. im Gießverfahren hergestellt, wobei sie auch direkt an den Faltenfilter angespritzt bzw. angegossen sein können. Auch eine Aufschäumung der genannten Materialien kann zweckmäßig sein.

In einer vorteilhaften Weiterbildung ist das Rahmenelement durch ein insbesondere blattfederförmiges Verstärkungselement ausgesteift. Das blattfederförmige Verstärkungselement kann beispielsweise aus Federstahl oder Kunststoff sein. In Verbindung mit einem weichen, anschmiegsamen Rahmenmaterial können die elastischen Rückstellkräfte zielgerichtet erhöht werden.

In einer vorteilhaften Ausführung weist das Rahmenelement ein Dichtelement zur Abdichtung gegen das Filtergehäuse auf, wobei das Dichtelement zweckmäßig zur Überbrückung eines Dichtspaltes zwischen dem Faltenfiltereinsatz und dem Filtergehäuse ausgelegt ist, dessen Breite zwischen 1 mm und 20 mm, vorzugsweise zwischen 5 mm und 10 mm beträgt. Toleranzen bei der selbsttätigen Formrückstellung der elastischen Montageverformung können ohne Dichtigkeitsverlust zuverlässig ausgeglichen werden.

In einer vorteilhaften Ausführung ist das Dichtelement durch einen tragenden Querschnittsschenkel des Rahmenelementes gebildet, dessen Schenkelachse in einem Winkel zwischen einschließlich 0° und einschließlich 90° und insbesondere zwischen einschließlich 45° und einschließlich 60° zur Senkrechten auf die Längsrichtung liegt. Der tragende Querschnittsschenkel übt dabei eine Doppelfunktion als gummielastisch verformbares Versteifungselement und als Dichtelement aus, wobei auf den Zusatzaufwand separater Dichtmittel verzichtet werden kann.

In einer zweckmäßigen Variante ist das Dichtelement durch eine Dichtlippe gebildet, deren Querschnittsachse insbesondere in einem Winkel zwischen einschließlich 45° und einschließlich 60° zur Senkrechten auf die Längsrichtung liegt. Die Dichtlippe kann beispielsweise einteilig an das Rahmenelement angeformt sein und aus dem gleichen Material bestehen. Das Rahmenelement kann ohne Rücksicht auf das Dichtigkeitserfordernis an die mechanischen Anforderungen hinsichtlich Verformbarkeit und gummielastischer Rückstellbarkeit ausgelegt sein, während die Dichtlippe in dem genannten Winkelbereich durch den bei der Durchströmung auftretenden Differenzdruck hinsichtlich einer dichtenden Anlage optimiert ist.

In einer vorteilhaften Ausführung weist das Rahmenelement einen etwa L-förmigen Querschnitt auf. Der lange Schenkel des L-Querschnittes ist mit dem stirnseitig angrenzenden Faltenschenkel oder den Längsseiten verbunden und erlaubt eine nahezu uneingeschränkte elastische Verformbarkeit, während der winklig abstehende Querschnittsschenkel die Rückformungskräfte erhöht und gleichzeitig auch die Funktion des Dichtelementes wahrnehmen kann.

In einer zweckmäßigen Variante weist das Rahmenelement einen etwa Z-förmigen Querschnitt auf. Insbesondere schließen zwei dem Faltenfilter zugewandt liegende Querschnittsschenkel des Z-förmigen Querschnittes einen Winkel zwischen einschließlich O° und einschließlich 90°, vorzugsweise zwischen 15° und 25° ein. Der Z-förmige Querschnitt erlaubt eine angepaßte, richtungsabhängige Steifigkeitsvorgabe, bei der quer zur Filterebene eine vergleichsweise hohe Steifigkeit gegeben ist, während in Längsrichtung des Filters sich der Z-Querschnitt zieharmonikaartig leicht verformen läßt. Die in diese Richtung formbedingte ausgeprägte Nachgiebigkeit erlaubt einen hohen Verformungsgrad ohne eine Schädigung des Faltenfiltereinsatzes. Die beiden dem Faltenfilter zugewandt liegenden Querschnittsschenkel sind zweckmäßig mit je einem Faltenschenkel des Faltenfilters verbunden. Eine gleichmäßige, schädigungsfreie Verformung des Rahmenelementes und des angrenzenden Filterbereiches ist sichergestellt.

In einer weiteren vorteilhaften Variante weist das Rahmenelement einen etwa U-förmigen Querschnitt auf, wobei das Rahmenelement insbesondere mit seinem U-förmigen Querschnitt zwei oder mehrere Faltenschenkel des Faltenfilters umgreift. Innerhalb des U-förmigen Querschnittes kann eine Falte mit zwei Faltenschenkeln eine eigenständige Verformung ausführen, die innerhalb gewisser Grenzen von der Verformung des Rahmenelementes entkoppelt ist. Lokale Knickstellen oder dergleichen sind zuverlässig vermieden.

Ausführungsbeispiele der Erfindung sind im folgenden anhand der Zeichnung näher beschrieben. Es zeigen:
- Fig. 1: in einer schematischen Blockdarstellung einen Faltenfiltereinsatz beim Einbau in ein Filtergehäuse im verformten Zustand während des Montagevorganges;
- Fig. 2: die Anordnung nach Fig. 1 mit dem Faltenfiltereinsatz im selbsttätig rückgeformten, montierten Zustand;
- Fig. 3: eine schematische Querschnittsdarstellung eines Ausführungsbeispieles des Faltenfiltereinsatzes nach den Fig. 1 und 2 mit einem stirnseitigen, L-förmigen Rahmenelement;
- Fig. 4: Einzelheiten des Rahmenelementes nach Fig. 3;
- Fig. 5: eine Variante der Anordnung nach Fig. 3 mit einem im Querschnitt Z-förmigen Rahmenelement;
- Fig. 6: eine weitere Variante des stirnseitigen Rahmenelementes mit einem U-förmigen Querschnitt;
- Fig. 7: eine schematische stirnseitige Ansicht des Falten-filtereinsatzes nach den Fig. 1 und 2 mit Einzelheiten des Querschnitts eines längsseitigen Rahmenelementes.

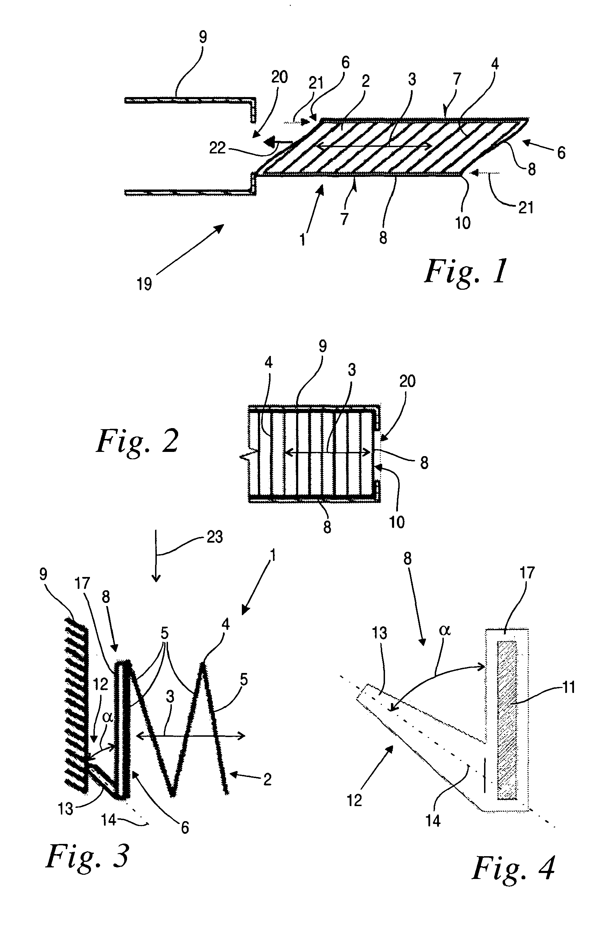

Fig. 1 zeigt als Blockdarstellung eine Draufsicht eines Zuluftfilters 19 eines Kraftfahrzeuges. Der Zuluftfilter 19 umfaßt ein Filtergehäuse 9 mit einer stirnseitigen Montageöffnung 20, die zur Entnahme bzw. zur Montage eines auswechselbaren Faltenfiltereinsatzes 1 vorgesehen ist. Der Faltenfiltereinsatz 1 umfaßt einen Faltenfilter 2 mit quer zu seiner Längsrichtung 3 liegenden Falten 4. An seinen beiden quer zur Längsrichtung 3 liegenden Stirnseiten 6 sowie an seinen beiden parallel zur Längsrichtung 3 liegenden Längsseiten 7 ist je ein Rahmenelement 8 vorgesehen, wobei die Rahmenelemente 8 fest mit dem Faltenfilter 2 sowie untereinander zur Bildung eines umlaufenden, geschlossenen Rahmens 10 verbunden sind.

Der Faltenfiltereinsatz 1 ist in einem parallelogrammartig verformten Zustand gezeigt, der zum Einführen des Faltenfiltereinsatzes 1 durch die Montageöffnung 20 ins Innere des Filtergehäuses 9 vorgesehen ist. Zur Erzeugung des verformten Zustandes sind parallelogrammartig zueinander versetzte, in Richtung von Pfeilen 21 wirkende Kräfte aufgebracht. In der Folge ist die stirnseitige Projektionsfläche des Faltenfiltereinsatzes 1 derart verringert, daß dieser in Richtung eines Pfeiles 22 durch die verengte Montageöffnung 20 hindurchgeschoben werden kann.

Die stirnseitigen Rahmenelemente 8 sind aus einem aufgeschäumten thermoplastischen Vulkanisat hergestellt, können aber auch bedarfsweise aus einem Elastomer, einem thermoplastischen Elastomer, aus Polyurethan und/oder aus Silikon aufgebaut sein, wobei bedarfsweise eine massive oder eine aufgeschäumte Ausführung zweckmäßig ist. Die stirnseitigen Rahmenelemente 8 weisen eine an die Montage in das Filtergehäuse 9 angepaßte gummielastische Nachgiebigkeit derart auf, daß sie infolge der Schubverformung des Faltenfiltereinsatzes 1 eine Biegung in Form einer beispielhaft gezeigten S-förmigen Biegelinie erfahren. Anstelle der gezeigten Schubverformung kann es auch zweckmäßig sein, die stirnseitigen Rahmenelemente 8 mittig in der Längsrichtung 3 einzudrücken, wobei das jeweilige Rahmenelement 8 und die angrenzenden Falten 4 einer entsprechenden Biegeverformung unterliegen. Bedarfsweise kann auch alternativ oder in Kombination dazu eine Torsions- oder eine Schubverformung der Rahmenelemente 8 zweckmäßig sein. Der Faltenfiltereinsatz 1 ist dabei im Bereich seiner Stirnseiten 6 derart elastisch verformbar, daß eine Montage des Faltenfiltereinsatzes in das Filtergehäuse 9 unter beengten räumlichen Bedingungen möglich ist.

Fig. 2 zeigt die Anordnung nach Fig. 1 mit dem im Filtergehäuse 9 montierten Faltenfiltereinsatz 1. Der Faltenfiltereinsatz 1 ist infolge der gummielastischen Nachgiebigkeit und der daraus entstehenden elastischen Rückstellkräfte selbsttätig und ohne weiteres Zutun in seine vorgesehene, unverformte Ausgangslage zurückverformt, wobei der Rahmen 10 ringsum dichtend an den Innenwänden des Filtergehäuses 9 anliegt. Die nach Fig. 1 parallelogrammförmig verschobenen Falten 4 liegen in der hier gezeigten entspannten, rückgestellten Position parallel bzw. rechtwinklig zu den Rahmenelementen 8 des rechtwinkligen Rahmens 10.

Fig. 3 zeigt in einer geschnittenen Seitenansicht den Faltenfiltereinsatz 1 nach den Fig. 1 und 2 im Bereich seines stirnseitigen Rahmenelementes 8. Das Rahmenelement weist einen etwa L-förmigen Querschnitt mit zwei winklig zueinander stehenden Querschnittsschenkeln 13, 17 auf. Der größere Querschnittsschenkel 17 liegt etwa senkrecht zur Längsrichtung 3 und ist flächig mit einem angrenzenden Faltenschenkel 5 der stirnseitigen Falte 4 verbunden. Die beiden Querschnittsschenkel 13, 17 sind einteilig auf dem Wege des Spritzgießens hergestellt, wobei der Querschnittsschenkel 17 an den angrenzenden Faltenschenkel 5 angespritzt ist. Es kann auch eine Verklebung oder eine andere geeignete Verbindung des Rahmenelementes 8 mit dem Faltenfilter 2 zweckmäßig sein. Ebenso kann es zweckmäßig sein, das Rahmenelement 8 auf dem Wege des Extrudierens oder des Gießens herzustellen. Darüber hinaus kann das Anbringen des Rahmenelementes 8 an den Längsseiten 7 (Fig. 1) zweckmäßig sein.

Das gezeigte Rahmenelement 8 ist biege-, torsions- und schubweich, wobei die Biegeweichheit in der Längsrichtung 3 formbedingt ausgeprägter ist als quer dazu. In der Längsrichtung 3 ist das Rahmenelement 8 durch den winklig abstehenden Querschnittsschenkel 13 ausgesteift. Beide Querschnittsschenkel 13, 17 üben damit eine tragende Funktion aus.

Im Betrieb ist der gezeigte Faltenfiltereinsatz 1 in Richtung eines Pfeiles 23 durchströmt, wodurch am Faltenfiltereinsatz 1 eine in gleicher Richtung wirkende Druckdifferenz anliegt. Bezogen auf den Pfeil 23 ist eine Schenkelachse 14 des Querschnittsschenkels 13 gegen die anliegende Druckdifferenz in einem Winkel α zur Senkrechten auf die Längsrichtung 13 abgewinkelt. Der Winkel α liegt vorteilhaft im Bereich zwischen einschließlich 45° und einschließlich 60° zur Senkrechten auf die Längsrichtung 3 und beträgt im gezeigten Ausführungsbeispiel etwa 45°. An seinem freien Ende liegt der Querschnittsschenkel 13 infolge seiner gummielastischen Rückstellkräfte in Verbindung mit der anliegenden Druckdifferenz dichtend an der Innenwand des Filtergehäuses 9 an, wodurch der Querschnittsschenkel 13 auch die Funktion eines Dichtelementes 12 ausübt.

Das Dichtelement 12 überbrückt dabei einen Dichtspalt zwischen dem Filtergehäuse 9 und der Stirnseite 6, dessen Breite zwischen 1 mm und 20 mm, vorzugsweise zwischen 5 und 10 mm beträgt.

Fig. 4 zeigt Einzelheiten einer Variante des Rahmenelementes 8 nach Fig. 3, demnach der Querschnittsschenkel 17 innenseitig mit einem Verstärkungselement 11 ausgesteift ist. Das Verstärkungselement 11 ist als Blattfeder aus Federstahl ausgeführt, und kann bedarfsweise auch aus einem geeigneten elastisch verformbaren Kunststoff hergestellt sein. Der im Winkel α abstehende Querschnittsschenkel verläuft in Richtung seines freien Endes trapezförmig sich verjüngend und ist an diesem Ende eckig ausgeführt. Es kann auch eine Ausführung mit bezogen auf die Schenkelachse 14 konstanter Dicke sowie mit einer gerundeten Querschnittsform am freien Ende zweckmäßig sein. In den übrigen Merkmalen und Bezugszeichen stimmt das Ausführungsbeispiel nach Fig. 4 mit dem nach Fig. 3 überein.

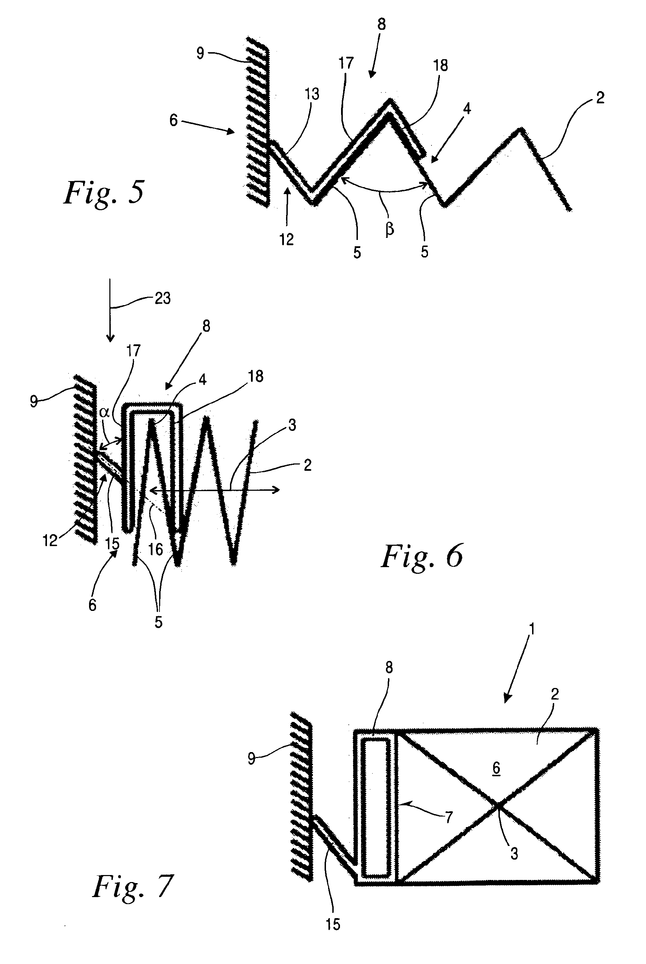

Fig. 5 zeigt eine Variante der Anordnung nach Fig. 3, bei der das stirnseitige Rahmenelement 8 einen etwa Z-förmigen Querschnitt aufweist. Der Z-förmige Querschnitt ist durch drei winklig zueinander liegende Querschnittsschenkel 13, 17, 18 gebildet, wobei der in Richtung des Filtergehäuses 9 liegende Querschnittsschenkel 13 als Dichtelement 12 entsprechend Fig. 3 ausgeführt ist. Die beiden in Richtung des Faltenfilters 2 weisenden tragenden Querschnittsschenkel 17, 18 sind mit je einem Faltenschenkel 5 der angrenzenden stirnseitigen Falte 4 des Faltenfilters 2 fest und flächig verbunden. Die beiden Querschnittsschenkel 17, 18 sowie die daran befestigten Faltenschenkel 5 schließen einen Winkel β ein, der im Bereich zwischen einschließlich 0° und einschließlich 90° und vorzugsweise zwischen 15° und 25° liegt.

Nach Fig. 6 ist ein weiteres Ausführungsbeispiel der Anordnungen nach den Fig. 3 und 5 vorgesehen, bei dem das an der Stirnseite 6 vorgesehene Rahmenelement 6 einen etwa U-förmigen Querschnitt aufweist. Der U-förmige Querschnitt ist im wesentlichen durch zwei parallel und mit Abstand zueinander liegende Querschnittsschenkel 17, 18 gebildet, die die beiden winklig zueinander liegenden Faltenschenkel 5 der stirnseitigen Falte 4 umgreifen. Es können auch zusätzliche Faltenschenkel 5 umgriffen werden. Das gummielastische Rahmenelement 8 ist als Ganzes verformbar. Zusätzlich ist eine Verformbarkeit derart gegeben, daß sich die beiden Querschnittsschenkel 17, 18 in der Längsrichtung 3 einander annähern, wobei die beiden winklig zueinander liegenden und dazwischen angeordneten Faltenschenkel 5 reversibel zusammengedrückt werden. Der offene U-förmige Querschnitt bewirkt zusätzlich eine definierte Torsionsweichheit. Von dem senkrecht zur Längsrichtung 3 liegenden Querschnittsschenkel 17 steht seitlich in Richtung der Innenwand des Filtergehäuses 9 ein Dichtelement 12 in Form einer nichttragenden Dichtlippe 15 ab. Dabei liegt eine Querschnittsachse 16 der Dichtlippe 15 gegen die durch den Pfeil 23 angedeutete Druckdifferenz in einem Winkel α, der im gezeigten Ausführungsbeispiel etwa 45° beträgt und vorzugsweise in einem Winkelbereich zwischen einschließlich 45° und einschließlich 60° zur Senkrechten auf die Längsrichtung 3 liegt.

Fig. 7 zeigt noch in einer schematischen Stirnansicht die Stirnseite 6 des Faltenfiltereinsatzes 1 nach den Fig. 1 und 2 mit einer Querschnittsdarstellung des an der Längsseite 7 angeordneten Rahmenelementes 8. Das längsseitige Rahmenelement 8 ist in Form eines geschlossenen Hohlprofiles mit etwa rechteckigem Querschnitt ausgebildet, wodurch sich eine im Vergleich zu den vorhergehend beschriebenen Ausführungsbeispielen eine erhöhte Biege-, Torsions- und Schubsteifigkeit ergibt. Der äußere Querschnittsbereich kann gummielastisch federnd eingedrückt werden, ohne daß sich diese Verformung direkt auf die Längsseite 7 des Faltenfilters 2 überträgt. Schädigungen des Faltenfilters 2 durch Stauchungen quer zur Längsrichtung 3 sind vermieden. Auf seiner der Innenwand der Filtergehäuses 9 zugewandten Seite ist an das Rahmenelement 8 noch eine Dichtlippe 15 angeformt, die ebenso wie beim Rahmenelement 8 nach Fig. 6 elastisch federnd an dem Filtergehäuse 9 anliegt und die gleichen Merkmale aufweist. Ein mit den gleichen Merkmalen ausgeführtes Rahmenelement 8 ist noch auf der gegenüberliegenden Längsseite angeordnet und der besseren Übersichtlichkeit halber nicht dargestellt. Die Dichtlippe 15 bzw. das Dichtelement 12 kann auch als Hohlkammerprofil entsprechend dem Rahmenelement 8 ausgeführt sein und ggf. auch einen Radius beschreiben.

In den weiteren Merkmalen und Bezugszeichen stimmen die Rahmenelemente 8 nach Fig. 4 bis 7 mit Rahmenelement 8 nach Fig. 3 überein. Insbesondere weisen auch die längsseitigen Rahmenelemente 8 (Fig. 7) eine bestimmte gummielastische Nachgiebigkeit auf, wodurch der Rahmen 10 (Fig. 1 und 2) zusammen mit dem Faltenfilter 2 einen insgesamt biege-, torsions- und schubverformbaren Faltenfiltereinsatz 1 bilden. Der Faltenfiltereinsatz 1 kann insgesamt als Einheit ohne Schädigung des Faltenfilters 2 in einem derartigen Maße verformt werden, daß eine Montage unter beengten räumlichen Bedingungen möglich ist.

In den Ausführungsbeispielen nach den Fig. 3 bis 7 ist jeweils eine Querschnittsform des Rahmenelementes 8 an einer Stirnseite 6 bzw. einer Längsseite 7 beschrieben. Die jeweils gegenüberliegenden Stirnseiten 6 bzw. Längsseiten 7 sind dabei mit einem gleichartigen Rahmenelement 8 versehen. Es kann auch zweckmäßig sein, abhängig von den Einbaubedingungen an einzelnen Stirnseiten 6 oder Längsseiten 7 abweichende Querschnittsformen vorzusehen. Ebenso kann es vorteilhaft sein, den gesamten Rahmen 10 mit Rahmenelementen 8 der gleichen Querschnittsform auszuführen.

## Patentansprüche

1. Zuluftfilter von Fahrzeuginnenräumen, mit einem eine Montage-öffnung (20) aufweisender Filtergehäuse (9) und einem Faltenfilteremsatz (1), welcher einen Faltenfilter (2) mit quer zu seiner Längsrichtung (3) liegenden Falten (4) mit Faltenschenkeln (5) aufweist, und wobei der faltenfilter (2) an beiden quer zur Längsrichtung (3) verlaufenden Stirnseiten (6) mit Rahmenelementen (8) versehen ist,
**dadurch gekennzeichnet,**
**dass** die Rahmenelemente (8) eine an die Montage in das Filtergehäuse (9) angepasste gummielastische Nachgiebigkeit derart aufweisen, dass
der Faltenfiltereinsatz in einem parallelogrammartigen Zustand verformbar ist, der zum Einführen des Faltenfiltereinsatzes (1) durch die Montageöffnung (20) in das Innere des Filtergehäuses (9) vorgesehen ist, wobei zur Erzeugung des verformten Zustandes parallelogrammartig zueinander versetzte Kräfte aufzubringen sind,
wobei in Folge der Verformung die stirnseitige Projektionsfläche des Faltenfiltereinsatzes (1) derart verringert ist, dass dieser durch die verengte Montageöffnung (20) hindurch geschoben werden kann, und wobei
nach dem Einfädeln die gummielastischen Eigenschaften der Rahmenelemente (8) für eine selbsttätige Rückstellung der Verformung sorgen, in deren Folge der Faltenfiltereinsatz (1) dicht an den Innenwänden des Filtergehäuses (9) anliegt.

2. Zuluftfilter nach Anspruch 1,
**dadurch gekennzeichnet, daß** weitere gummielastische Rahmenelemente (8) an Längsseiten (7) des Faltenfilters (2) vorgesehen sind, die insbesondere zusammen mit den Rahmenelementen (8) an den Stirnseiten (6) einen geschlossenen, umlaufenden Rahmen (10) bilden.

3. Zuluftfilter nach Anspruch 1 oder 2,
**dadurch gekennzeichnet, daß** die Rahmenelemente (8) biegeweich, torsionsweich und/oder schubweich ist.

4. Zuluftfilter nach einem der Ansprüche 1 bis 3, **dadurch gekennzeichnet, daß** die Rahmenelemente (8) aus einem thermoplastischen Vulkanisat, einem Elastomer, einem thermoplastischen Elastomer, aus Polyurethan und/oder aus Silikon aufgebaut said.

5. Zuluftfilter nach einem der Ansprüche 1 bis 4, **dadurch gekennzeichnet, daß** die Rahmenelemente (8) im Extrudierverfahren, im Spritzgußverfahren oder im Gießverfahren hergestellt said.

6. Zuluftfilter nach einem der Ansprüche 1 bis 5, **dadurch gekennzeichnet, daß** das Material der Rahmenelemente (8) geschäumt ist.

7. Zuluftfilter nach einem der Ansprüche 1 bis 6, **dadurch gekennzeichnet, daß** die Rahmenelemente (8) durch ein insbesondere blattfederförmiges Verstärkungselement (11) ausgesteift said.

8. Zuluftfilter nach einem der Ansprüche 1 bis 7, **dadurch gekennzeichnet, daß** die Rahmenelemente (8) ein Dichtelement (12) zur Abdichtung gegen das Filterge-häuse (9) aufweisen.

9. Zuluftfilter nach Anspruch 8,
**dadurch gekennzeichnet, daß** das Dichtelement (12) zur Überbrückung eines Dichtspaltes zwischen dem Faltenfiltereinsatz (1) und dem Filtergehäuse (9) ausgelegt ist, dessen Breite zwischen 1 mm und 20 mm, vorzugsweise zwischen 5 mm und 10 mm beträgt.

10. Zuluftfilter nach Anspruch 8 oder 9,
**dadurch gekennzeichnet, daß** das Dichtelement (12) durch einen tragenden Querschnittsschenkel (13) des Rahmenelementes (8) gebildet ist, dessen Schenkelachse (14) in einem Winkel (α) zwischen einschließlich 0° und einschließlich 180° und insbesondere zwischen einschließlich 45° und einschließlich 60° zur Senkrechten auf die Längsrichtung (3) liegt.

11. Zuluftfilter nach Anspruch 8 oder 9,
**dadurch gekennzeichnet, daß** das Dichtelement (12) durch eine Dichtlippe (15) gebildet ist, deren Querschnittsachse (16) insbesondere in einem Winkel (α) zwischen einschließlich 45° und einschließlich 60° zur Senkrechten auf die Längsrichtung (3) liegt.

12. Zuluftfilter nach einem der Ansprüche 1 bis 11, **dadurch gekennzeichnet, daß** die Rahmenelemente (3) einen etwa L-förmigen Querschnitt aufweisen.

13. Zuluftfilter nach einem der Ansprüche 1 bis 11, **dadurch gekennzeichnet, daß** die Rahmenelemente (8) einen etwa Z-förmigen Querschnitt aufweisen.

14. Zuluftfilter nach Anspruch 13,
**dadurch gekennzeichnet, daß** zwei dem Faltenfilter (2) zugewandt liegende Querschnittsschenkel (17, 18) des Z-förmigen Querschnitts einen Winkel (β) zwischen einschließlich 0° und einschließlich 90°, vorzugsweise zwischen 15° und 25° einschließen.

15. Zuluftfilter nach Anspruch 14,
**dadurch gekennzeichnet, daß** die beiden dem Faltenfilter (2) zugewandt liegenden Querschnittsschenkel (17, 18) mit je einem Faltenschenkel (5) des Faltenfilters verbunden sind.

16. Zuluftfilter nach einem der Ansprüche 1 bis 11, **dadurch gekennzeichnet, daß** die Rahmenelemente (8) einen etwa U-förmigen Querschnitt aufweisen.

17. Zuluftfilter nach Anspruch 16,
**dadurch gekennzeichnet, daß** die Rahmenelemente (8) mit seinem U-förmigen Querschnitt mindestens zwei Faltenschenkel (5) des Faltenfilters (2) umgreifen.

## Claims

1. Intake air filter for vehicle passenger compartments, with a filter housing (9) featuring an assembly opening (20) and a folded filter insert (1) which features a folded filter (2) with folds (4) with fold brackets (5) extending transverse to its longitudinal direction (3), and the folded filter (2) being provided with frame elements (8) on both end faces (6) extending transverse to the longitudinal direction (3), **characterized in that** the frame elements (8) feature a rubbery-elastic resilience adapted to the mounting in the filter housing (9) such that the folded filter insert is deformable in a parallelogram-shaped state which is intended for inserting the folded filter insert (1) through the assembly opening (20) into the interior of the filter housing (9), for generating the deformed state parallelogram-shaped forces offset to each other being required, as a consequence of the deformation the frontal projection area of the folded filter insert (1) being reduced such that it can be pushed through the narrowed assembly opening (20), and after threading in the rubbery-elastic properties of the frame elements (8) ensuring an automatic retraction of the deformation as a consequence of which the folded filter insert (1 ) tightly contacts the filter housing (9).

2. Intake air filter according to claim 1, **characterized in that** further rubbery-elastic frame elements (8) are provided at the longitudinal sides (7) of the folded filter (2) which form in particular together with the frame elements (8) at the end faces (6) a closed peripheral frame (10).

3. Intake air filter according to claim 1 or 2, **characterized in that** the frame elements (8) are flexible, torsionally soft and/or shear-flexible.

4. Intake air filter according to one of the claims 1 to 3, **characterized in that** the frame elements (8) are made of a thermoplastic vulcanisate, an elastomere, a thermoplastic elastomere, a polyurethane and/or silicone.

5. Intake air filter according to one of the claims 1 to 4, **characterized in that** the frame elements (8) are manufactured in an extrusion process, in an injection molding process or in a casting process.

6. Intake air filter according to one of the claims 1 to 5, **characterized in that** the material of the frame elements (8) is foamed.

7. Intake air filter according to one of the claims 1 to 6, **characterized in that** the frame elements (8) are stiffened by an in particular spring-leaf-shaped reinforcement element (11).

8. Intake air filter according to one of the claims 1 to 7, **characterized in that** the frame elements (8) feature a seal element (12) for sealing them against the filter housing (9).

9. Intake air filter according to claim 8, **characterized in that** the seal element (12) is designed for bridging a seal gap between the folded filter insert (1) and the filter housing (9), the width of which is between 1 mm and 20 mm, preferably between 5 mm and 10 mm.

10. Intake air filter according to claim 8 or 9, **characterized in that** the seal element (12) is formed by a supporting cross-sectional bracket (13) of the frame element (8), the bracket axis (14) of which lies in the longitudinal direction (3) in an angle (α) between 0° inclusive and 180° inclusive and in particular between 45° inclusive and 60° inclusive in relation to the perpendicular.

11. Intake air filter according to claim 8 or 9, **characterized in that** the seal element (12) is formed by a sealing lip (15), the bracket axis (16) of which lies in the longitudinal direction (3) in particular in an angle (α) between 45° inclusive and 60° inclusive in relation to the perpendicular.

12. Intake air filter according to one of the claims 1 to 11, **characterized in that** the frame elements (8) feature an approximately L-shaped cross-section..

13. Intake air filter according to one of the claims 1 to 11, **characterized in that** the frame elements (8) feature an approximately Z-shaped cross-section..

14. Intake air filter according to claim 13, **characterized in that** two cross-sectional brackets (17, 18) facing the folded filter (2) of the Z-shaped cross-section include an angle (β) between 0°inclusive and 90° inclusive, preferably between 15° and 25°.

15. Intake air filter according to claim 14, **characterized in that** the two cross-sectional brackets (17, 18) facing the folded filter (2) are connected with a fold bracket (5) each of the folded filter.

16. Intake air filter according to one of the claims 1 to 11, **characterized in that** the frame elements (8) feature an approximately U-shaped cross-section.

17. Intake air filter according to claim 16, **characterized in that** the frame elements (8) with their U-shaped cross-section surround at least two fold brackets (5) of the folded filter (2).

## Revendications

1. Filtre à air frais pour habitacles de véhicules automobiles avec un boîtier de filtre (9) comprenant une ouverture de montage (20) et avec un insert de filtre à plis (1 ), présentant un filtre à plis (2) doté de plis (4) placés en travers du sens longitudinal (3) du filtre avec des flancs de plis (5), le filtre à plis (2) étant pourvu d'éléments-cadres (8) sur les deux faces frontales (6) s'étendant en travers du sens longitudinal (3), **caractérisé en ce que** les éléments-cadres (8) font preuve d'une flexibilité de type caoutchouc élastique adaptée au montage dans le boîtier de filtre (9), de manière à ce que l'insert de filtre à plis (1) puisse être déformé en une sorte de parallélogramme qui est prévu pour l'introduction de l'insert de filtre à plis (1) par l'ouverture de montage (20) dans l'intérieur du boîtier de filtre (9), des forces décalées les unes par rapport aux autres devant être exercées pour générer l'état déformé en une sorte de parallélogramme, la surface de projection frontale de l'insert de filtre à plis (1) étant, en raison de la déformation, réduite de manière à ce que cet insert puisse être glissé à travers l'ouverture de montage (20) rétrécie et, suite à cette introduction, les propriétés élastiques des éléments-cadres (8) assurant une retour automatique de la déformation, ayant pour conséquence que l'insert de filtre à plis (1) est fermement appliqué sur les parois intérieures du boîtier de filtre (9).

2. Filtre à air frais selon la revendication 1, **caractérisé en ce que** d'autres éléments-cadres (8) élastiques sont prévus sur des côtés longitudinaux (7) du filtre à plis (2) qui forment, en particulier avec les éléments-cadres (8), sur les faces frontales (6) un cadre (10) fermé et périphérique.

3. Filtre à air frais selon la revendication 1 ou 2, **caractérisé en ce que** les éléments-cadres (8) sont souples à la flexion, souples à la torsion et/ou souples à la poussée.

4. Filtre à air frais selon l'une des revendications 1 à 3, **caractérisé en ce que** les éléments-cadres (8) sont constitués d'un vulcanisat thermoplastique, d'un élastomère, d'un élastomère thermoplastique, de polyuréthane et/ou de silicone.

5. Filtre à air frais selon l'une des revendications 1 à 4, **caractérisé en ce que** les éléments-cadres (8) sont fabriqués selon le procédé d'extrusion, le procédé de moulage par injection ou le procédé de coulée.

6. Filtre à air frais selon l'une des revendications 1 à 5, **caractérisé en ce que** le matériau des éléments-cadres (8) est expansé.

7. Filtre à air frais selon l'une des revendications 1 à 6, **caractérisé en ce que** les éléments-cadres (8) sont consolidés par un élément de renfort (11) en particulier en forme de ressort plat.

8. Filtre à air frais selon l'une des revendications 1 à 7, **caractérisé en ce que** les éléments-cadres (8) présentent un élément d'étanchéité (12) destiné à les étancher par rapport au boîtier de filtre (9).

9. Filtre à air frais selon la revendication 8, **caractérisé en ce que** l'élément d'étanchéité (12) est conçu pour combler un espace d'étanchéité entre l'insert de filtre à plis (1) et le boîtier de filtre (9) dont la largeur se situe entre 1 mm et 20 mm, de préférence entre 5 mm et 10 mm.

10. Filtre à air frais selon la revendication 8 ou 9, **caractérisé en ce que** l'élément d'étanchéité (12) est formé par un flanc de section (13) porteur de l'élément-cadre (8) dont l'axe de flanc (14) est disposé en sens longitudinal (3) dans un angle (α) compris entre 0 inclus et 180° inclus, et notamment dans un angle compris entre 45° inclus et 60° inclus par rapport à l'axe vertical.

11. Filtre à air frais selon la revendication 8 ou 9, **caractérisé en ce que** l'élément d'étanchéité (12) est formé par une lèvre d'étanchéité (15) dont l'axe de section (16) est disposé en sens longitudinal (3) notamment dans un angle (α) compris entre 45° inclus et 60° inclus par rapport à l'axe vertical.

12. Filtre à air frais selon l'une des revendications 1 à 11, **caractérisé en ce que** les éléments-cadres (8) présentent une section approximativement en forme de L.

13. Filtre à air frais selon l'une des revendications 1 à 11, **caractérisé en ce que** les les éléments-cadres (8) présentent une section approximativement en forme de Z.

14. Filtre à air frais selon la revendication 13, **caractérisé en ce que** deux flancs de section (17, 18) de la section en forme de Z orientés vers le filtre à plis (2) forment un angle (β) compris entre 0° inclus et 90° inclus, de préférence entre 15° ° et 25°.

15. Filtre à air frais selon la revendication 14, **caractérisé en ce que** les deux flancs de section (17, 18) orientés vers le filtre à plis (2) sont reliés respectivement par un flanc de pli (5) du filtre à plis.

16. Filtre à air frais selon l'une des revendications 1 à 11, **caractérisé en ce que** les éléments-cadres (8) présentent une section approximativement en forme de U.

17. Filtre à air frais selon la revendication 16, **caractérisé en ce que** les éléments-cadres (8) entourent avec leur section en forme de U au moins deux flancs de plis (5) du filtre à plis (2).
